# EUROPÄISCHE PATENTSCHRIFT

(11) **EP 3 769 048 B1**
(45) Veröffentlichungstag und Bekanntmachung des Hinweises auf die Patenterteilung: **07.12.2022**
(21) Anmeldenummer: 19712728.5
(22) Anmeldetag: 18.03.2019
(51) Int. Cl.: B66C 23/80, B66C 23/88, B66F 17/00, G01D 21/00, E02F 9/24, E02F 9/08, E04G 21/04

(54) **VORRICHTUNG ZUR GRUNDBRUCHÜBERWACHUNG UND SYSTEM**
DEVICE FOR BEARING CAPACITY FAILURE MONITORING AND SYSTEM
DISPOSITIF POUR LA SURVEILLANCE DE RUPTURES ET SYSTÈME

(30) Priorität: 20.03.2018 DE 102018204281
(43) Veröffentlichungstag der Anmeldung: 27.01.2021
(73) Patentinhaber: Putzmeister Engineering GmbH, 72631 Aichtal (DE)
(72) Erfinder: MAYER, Martin, 72768 Reutlingen (DE); LUTZEYER, Christian, 70193 Stuttgart (DE); PETRESCU, Marc, 73037 Göppingen (DE); SCHLECHTER, Holger, 74182 Obersulm (DE)
(74) Vertreter: Patentanwälte Ruff, Wilhelm, Beier, Dauster & Partner mbB
(86) Internationale Anmeldenummer: PCT/EP2019/056689
(87) Internationale Veröffentlichungsnummer: WO 2019/179932

(56) Entgegenhaltungen:
- EP-A1- 2 727 876
- DE-A1- 10 320 382
- DE-U1-202014 000 334
- US-A1- 2017 217 737
- US-B1- 9 550 475

## Beschreibung

### ANWENDUNGSGEBIET UND STAND DER TECHNIK

Die Erfindung bezieht sich auf eine Vorrichtung zur Grundbruchüberwachung für eine mobile Arbeitsmaschine und ein System mit einer solchen Vorrichtung.

Die EP 2 727 876 A1 offenbart ein Auslegerauflagen-Überwachungssystem eines Kranes, das die Stabilität des abgestützten Kranes bestimmt. Hierzu wird mittels eines Lastsensors die Belastung von Stützfüßen im abgestützten Zustand gemessen und mit einer zu erwartenden Belastung verglichen.

Die US 9,550,475 B1 offenbart einen Auslegerfuß mit einem Näherungssensor, der eine Belastung des Auslegerfußes zur Stabilitätsbestimmung überwacht.

Die DE 103 20 382 A1 offenbart eine mobile Arbeitsmaschine mit teleskopierbaren Stützfüßen. Um beim Aufstellen der Arbeitsmaschine eine zuverlässige Vorhersage über die Tragfähigkeit des Untergrundes machen zu können, sind im Bereich der Stützfüße Messeinrichtungen angeordnet, die einen Stützlastsensor sowie einen stützfußbezogenen Bewegungssensor zur Erfassung der momentanen Stützlast und der Stützfußbewegung beim Aufstellvorgang aufweisen.

Die DE 20 2014 000 334 U1 offenbart einen Kran mit einer Stützkraftmesseinrichtung zur Messung einer Stützkraft innerhalb des Kraftflusses der Abstützelemente des Krans

Als Grundbruch wird in der Bodenmechanik ein, insbesondere seitliches, Wegbrechen des Bodens durch zu große Krafteinwirkung bezeichnet. Grundbruch ist eine der häufigsten Ursachen für das Umstürzen von abgestützten mobilen Arbeitsmaschinen, beispielsweise von Betonpumpen. Als Folge des Grundbruchs kommt es regelmäßig zu Verletzungen und Todesfällen.

### AUFGABE UND LÖSUNG

Der Erfindung liegt als Aufgabe die Bereitstellung einer Vorrichtung zur Grundbruchüberwachung für eine mobile Arbeitsmaschine und eines Systems zugrunde, die ein möglichst frühzeitiges Erkennen eines Grundbruchs ermöglichen.

Die Erfindung löst diese Aufgabe durch die Bereitstellung einer Vorrichtung zur Grundbruchüberwachung für eine mobile Arbeitsmaschine mit den Merkmalen des Anspruchs 1 und die Bereitstellung eines Systems mit den Merkmalen des Anspruchs 6.

Die Vorrichtung zur Grundbruchüberwachung findet bei Arbeitsmaschinen wie beispielsweise Autokränen oder Autobetonpumpen Verwendung, die eine Anzahl von Stützauslegern aufweisen. Die Anzahl von Stützauslegern kann beispielsweise zwischen eins und acht liegen. Bevorzugt beträgt die Anzahl von Stützauslegern vier.

Ein jeweiliger Stützausleger kann ein, insbesondere hydraulisches betriebenes, Teleskop aufweisen.

Ein jeweiliger Stützausleger weist einen Stützfuß mit einem Stützfußteller auf.

In einem abgestützten Zustand der mobilen Arbeitsmaschine ist der Stützfußteller mindestens eines Stützfußes auf einem die Arbeitsmaschine umgebenden Untergrund bzw. Boden abgestützt oder auf einer Unterlegplatte abgestützt. Die Unterlegplatte, sofern vorhanden, kann auf dem die Arbeitsmaschine umgebenden Untergrund bzw. Boden aufgelegt sein.

Der abgestützte Zustand kann nach Abschließen oder Beenden eines Aufstellvorgangs der Arbeitsmaschine erreicht werden. Insbesondere wird während des Aufstellvorgangs der Stützfuß durch eine kontrollierte vertikale und/oder horizontale Stützfußbewegung auf dem Untergrund oder auf der Unterlegplatte positioniert. Im abgestützten Zustand kann die Arbeitsmaschine betriebsbereit sein oder betrieben werden.

Die erfindungsgemäße Vorrichtung zur Grundbruchüberwachung einer mobilen Arbeitsmaschine weist eine Anzahl von Sensoren zum Erfassen einer Lageänderung mindestens eines Stützfußtellers und/oder mindestens einer Unterlegplatte, im abgestützten Zustand auf.

Ein jeweiliger Sensor kann derart mit reduzierter Sensorfunktionalität ausgebildet sein, dass er ausschließlich eine Lageänderung des Stützfußtellers und/oder der Unterlegplatte erfasst, nicht jedoch noch weitere Messgrößen, wie beispielsweise die Position. Alternativ kann ein jeweiliger Sensor jedoch auch noch weitere Messgrößen erfassen.

Die Lageänderung ist erfindungsgemäß ein Kippen, ein Neigen oder eine Rotation um eine oder mehrere Rotationsachsen, da derartige Lageänderungen spezifisch für das Beginnen eines Grundbruchs sind. Keine Lageänderung im Sinne der Erfindung ist jedoch insbesondere ein bloßes Einsinken des Stützfußtellers und/oder der Unterlegplatte in den Untergrund ohne eine Kipp-Komponente, ohne eine Neigungs-Komponente und/oder ohne eine Rotations-Komponente, wie sie beispielsweise durch gleichmäßiges Setzen des Untergrunds über die gesamte Fläche des Stützfußtellers und/oder der Unterlegplatte verursacht wird. Ein bloßes Einsinken ist nicht spezifisch für einen Grundbruch.

Weiter weist die Vorrichtung eine Auswerteeinheit auf. Vorteilhafterweise kann die Auswerteeinheit ein Computer, ein Smartphone, ein Tablet, ein mikroprozessorbasierte Steuereinrichtung und/oder eine Steuereinheit der Arbeitsmaschine sein.

Die Auswerteeinheit steht mit den Sensoren zum Übertragen der Sensordaten in Datenverbindung. Vorteilhafterweise kann die Datenverbindung kabelgebunden und/oder kabellos sein, insbesondere eine UMTS-, WLAN-, und/oder Bluetooth Datenverbindung.

Die Auswerteeinheit ist dazu ausgebildet, basierend auf einer mittels der Anzahl von Sensoren erfassten Lageänderung des mindestens eines Stützfußtellers und/oder der mindestens einen Unterlegplatte einen Grundbruch zu detektieren. Insbesondere kann die Auswerteeinheit den Grundbruch detektieren, wenn die erfasste Lageänderung einen Schwellwert überschreitet. Der Schwellwert kann beispielsweise ein Kippwinkel des Stützfußtellers und/oder der Unterlegplatte im Bereich von 1° bis 5° sein. Bevorzugt beträgt der Schwellwert 2° oder 3°. Auch kann eine Lageänderungsrate zur Detektion des Grundbruchs ausgewertet werden.

Die Anzahl von Sensoren kann beispielsweise gleich der Anzahl von Stützfußtellern und/oder Unterlegplatten sein. Für diesen Fall sind typische mehrere, beispielsweise vier oder acht, Sensoren und eine einzige Auswerteeinheit vorgesehen, die mit allen Sensoren in Datenverbindung steht und die die Sensorsignale aller Sensoren auswertet. Alternativ kann lediglich ein einzelner Sensor vorgesehen sein, so dass der Sensor und die Auswerteeinheit beispielsweise ein nachrüstbares Stand-alone-Gerät bilden.

Die Vorrichtung zur Grundbruchüberwachung ermöglicht es im abgestützten Zustand der Arbeitsmaschine einen Grundbruch frühzeitig zu erkennen. Durch die frühzeitige Erkennung des Grundbruchs und seiner Signalisierung können sich Personen im Umfeld der Arbeitsmaschine rechtzeitig in Sicherheit bringen.

In einer Weiterbildung der Erfindung weist ein jeweiliger Sensor aus der Anzahl von Sensoren einen Kippsensor, einen Neigungssensor, einen Lagesensor, einen Beschleunigungssensor, einen Drucksensor, einen Wegsensor, einen Distanzsensor und/oder ein 3D-Kamerasystem auf.

In einer Weiterbildung der Erfindung weist die Vorrichtung einen Signalgeber auf, der dazu ausgebildet ist, bei einem detektierten Grundbruch ein Warnsignal auszugeben, insbesondere ein optisches, akustisches und/oder haptisches Warnsignal. Vorteilhafterweise kann der Signalgeber ein Display, einen Lautsprecher und/oder ein Vibrationselement aufweisen.

In einer Weiterbildung der Erfindung weist die Vorrichtung zur Grundbruchüberwachung einen Energiespeicher auf, der dazu ausgebildet ist, die Vorrichtung zur Grundbruchüberwachung mit Energie zu versorgen. Der Energiespeicher kann ein Treibstofftank sein, der mit Treibstoff gefüllt ist. Insbesondere kann ein Motor durch Verbrennung des Treibstoffs elektrische Energie zur Versorgung der Vorrichtung erzeugen. Alternativ kann der Energiespeicher eine Batterie, ein Akkumulator, ein Druckluftspeicher oder ein Hydraulikspeicher sein.

In einer Weiterbildung der Erfindung ist der Signalgeber dazu ausgebildet, ein Ladezustandswarnsignal auszugeben, wenn ein Ladezustand des Energiespeichers einen Grenzwert unterschreitet. Das Ladezustandswarnsignal kann ein optisches, akustisches und/oder haptisches Warnsignal sein. Insbesondere kann sich das Ladezustandswarnsignal von dem Warnsignal eines detektierten Grundbruchs unterscheiden. Vorteilhafterweise kann der Grenzwert derart gewählt sein, dass der Energiespeicher mit seinem Ladezustand die Vorrichtung noch für, insbesondere mindestens, eine, zwei oder drei Stunden mit Energie versorgen kann.

Des Weiteren bezieht sich die Erfindung auf ein System. Das System weist eine mobile Arbeitsmaschine mit einer Anzahl von Stützauslegern und eine oben beschriebene Vorrichtung zur Grundbruchüberwachung auf. Ein jeweiliger Stützausleger weist einen Stützfuß mit einem Stützfußteller auf. In einem abgestützten Zustand der mobilen Arbeitsmaschine ist der Stützfußteller mindestens eines Stützfußes auf einem die Arbeitsmaschine umgebenden Untergrund angeordnet oder auf einer Unterlegplatte angeordnet. Die Unterlegplatte, sofern vorhanden, ist auf dem die Arbeitsmaschine umgebenden Untergrund aufgelegt.

In einer Weiterbildung der Erfindung ist die Vorrichtung zur Grundbruchüberwachung dazu ausgebildet, bei einem detektierten Grundbruch einen Betrieb der Arbeitsmaschine zu unterbrechen. Durch das Unterbrechen des Betriebs der Arbeitsmaschine wird die Sicherheit des Systems bei Detektion eines Grundbruchs erhöht.

### KURZBESCHREIBUNG DER ZEICHNUNGEN

Die Erfindung wird nachfolgend unter Bezugnahme auf die Zeichnungen detailliert beschrieben. Hierbei zeigt:
- Fig. 1: ein schematisches Blockdiagramm einer Vorrichtung zur Grundbruchüberwachung gemäß einer ersten Ausführungsform,
- Fig. 2: ein System mit einer Arbeitsmaschine und der Vorrichtung zur Grundbruchüberwachung von Fig. 1, wobei die Vorrichtung zur Grundbruchüberwachung auf einem Stützfußteller der Arbeitsmaschine angeordnet ist,
- Fig. 3: ein System mit einer Arbeitsmaschine und der Vorrichtung zur Grundbruchüberwachung von Fig. 1, wobei die Vorrichtung zur Grundbruchüberwachung auf einer Unterlegplatte angeordnet ist,
- Fig. 4: ein System mit einer Arbeitsmaschine und der Vorrichtung zur Grundbruchüberwachung von Fig. 1, wobei die Vorrichtung zur Grundbruchüberwachung zwischen einem Stützfußteller der Arbeitsmaschine und einer Unterlegplatte angeordnet ist,
- Fig. 5: ein System mit einer Arbeitsmaschine und der Vorrichtung zur Grundbruchüberwachung von Fig. 1, wobei die Vorrichtung zur Grundbruchüberwachung an der Arbeitsmaschine angeordnet ist und einen Distanzsensor aufweist,
- Fig. 6: ein System mit einer Arbeitsmaschine und der Vorrichtung zur Grundbruchüberwachung von Fig. 1, wobei die Vorrichtung zur Grundbruchüberwachung an der Arbeitsmaschine angeordnet ist und einen 3D-Kamerasystem aufweist,
- Fig. 7: ein schematisches Blockdiagramm einer Vorrichtung zur Grundbruchüberwachung gemäß einer weiteren Ausführungsform, und
- Fig. 8: ein System mit einer Arbeitsmaschine und der Vorrichtung zur Grundbruchüberwachung von Fig. 7.

### DETAILLIERTE BESCHREIBUNG DER AUSFÜHRUNGSBEISPIELE

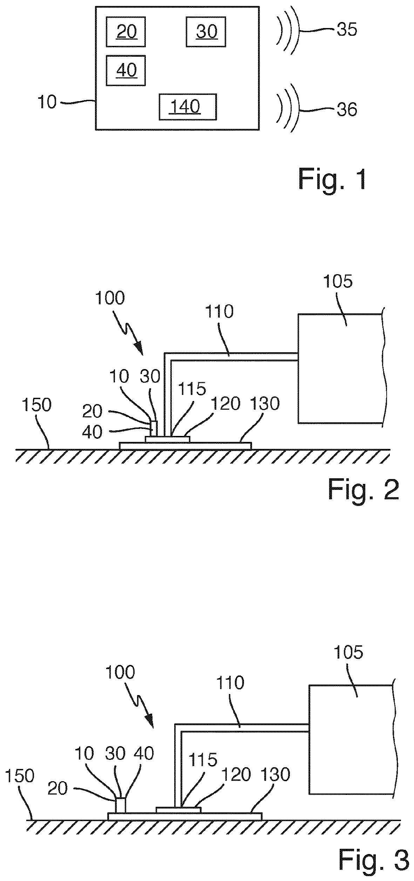

Fig. 1 zeigt ein schematisches Blockdiagramm einer Vorrichtung 10 zur Grundbruchüberwachung für eine mobile Arbeitsmaschine, wie sie beispielsweise exemplarisch in Fig. 2 mit dem Bezugszeichen 105 dargestellt ist. Typischerweise weist die Arbeitsmaschine 105 mindestens einen Stützausleger 110 auf, wobei der mindestens eine Stützausleger 110 einen Stützfuß 115 mit einem Stützfußteller 120 aufweist. In einem abgestützten Zustand der mobilen Arbeitsmaschine 105 ist der Stützfußteller 120 des Stützfußes 115 auf einem die Arbeitsmaschine 105 umgebenden Untergrund 150 angeordnet oder auf einer Unterlegplatte 130 angeordnet.

Die Vorrichtung 10 zur Grundbruchüberwachung weist einen Sensor 20 zum Erfassen einer Lageänderung des Stützfußtellers 120 und/oder der Unterlegplatte 130 auf.

Weiter weist die Vorrichtung 10 eine Auswerteeinheit 40 auf, die mit dem Sensor 20 in Datenverbindung steht und die dazu ausgebildet ist, basierend auf einer mit dem Sensor 20 erfassten Lageänderung des Stützfußtellers 120 und/oder der Unterlegplatte 130 einen Grundbruch zu detektieren.

Weiter weist die Vorrichtung 10 einen Signalgeber 30 auf. Der Signalgeber 30 weist eine Lichtquelle und einen Lautsprecher auf. Infolge eines detektierten Grundbruchs durch die Auswerteeinheit 40 sendet der Signalgeber 30 ein Warnsignal 35 aus, das ein Blinklichtsignal und ein akustisches Signal aufweist.

Wie in Fig. 1 dargestellt, weist die Vorrichtung 10 zur Grundbruchüberwachung weiter einen Energiespeicher 140 in Form eines austauschbaren und/oder aufladbaren Akkumulators auf, der die Vorrichtung 10 zur Grundbruchüberwachung mit Energie versorgt.

Wenn ein Ladezustand des Energiespeichers 140 einen Grenzwert unterschreitet, wird von dem Signalgeber 30 ein Ladezustandswarnsignal 36 ausgegeben. Der Grenzwert beträgt 10% des maximal möglichen Ladezustands des Energiespeichers 140. Das Ladezustandswarnsignal 36 unterscheidet sich vom Warnsignal 35 beispielsweise in einer Tonlage und/oder Lautstärke des akustischen Signals und in einer Wellenlänge und/oder einer Blinkfrequenz des Blinklichtsignals.

Fig. 2 zeigt ein System 100 mit einer Arbeitsmaschine 105 und der Vorrichtung 10 zur Grundbruchüberwachung von Fig. 1. Die mobile Arbeitsmaschine 105 ist in Fig. 2 lediglich schematisch in einer Seitenansicht dargestellt. Die Arbeitsmaschine 105 weist insgesamt vier Stützausleger 110 auf. Übersichtshalber ist lediglich ein einzelner Stützausleger 110 der Arbeitsmaschine 105 dargestellt. Ein jeweiliger Stützausleger 110 weist einen Stützfuß 115 mit einem Stützfußteller 120 auf.

Fig. 2 zeigt einen abgestützten Zustand der mobilen Arbeitsmaschine 105. In diesem abgestützten Zustand ist ein jeweiliger Stützfußteller 120 des Stützfußes 115 auf einer zugehörigen Unterlegplatte 130 angeordnet, wobei die Unterlegplatte 130 auf einem die Arbeitsmaschine 105 umgebenden Untergrund 150 bzw. Boden angeordnet ist. In einem solchen abgestützten Zustand ist die Arbeitsmaschine 105 betriebsbereit oder wird betrieben.

Die Vorrichtung 10 weist die Form einer Kassette auf. Die kassettenförmige Vorrichtung 10 kann auf dem Stützfußteller 120 angeordnet werden, indem sie beispielsweise auf den Stützfußteller 120 gestellt oder gelegt wird. Auf den übrigen, nicht gezeigten Stützfußtellern kann jeweils eine weitere Vorrichtung entsprechend angeordnet sein.

Der Sensor 20 kann ein Beschleunigungssensor zur Erfassung einer Lageänderung des Stützfußtellers 120 sein, wobei diese Lageänderung des Stützfußtellers 120 spezifisch für einen sich ankündigen Grundbruch ist. Der Sensor 20 ist insbesondere dazu ausgebildet, eine Rotation um eine Längsachse, Querachse und/oder Vertikalachse des Stützfußtellers 120, ein Kippen und/oder ein Neigen des Stützfußtellers 120 zu detektieren. Eine Lageänderung des Stützfußtellers 120 bewirkt eine entsprechende Lageänderung des Sensors 20, so dass die Lageänderung des Stützfußtellers 120 mittels des Sensors 20 erfasst werden kann. Alternativ oder zusätzlich kann der Sensor auch ein Kippsensor, ein Neigungssensor, ein Lagesensor, ein Drucksensor und/oder ein Wegsensor sein.

Wenn der Sensor 20 eine Lageänderung des Stützfußtellers 120, beispielsweise in Form einer Drehung und/oder eines Kippens des Stützfußtellers 120 um seine Querachse, erfasst, so wird diese erfasste Lageänderung über die Datenverbindung an die Auswerteeinheit 40 übertragen. Die Auswerteeinheit 40 detektiert einen Grundbruch, wenn die erfasste Lageänderung beispielsweise einen Grenzwert von 0,4°/Sekunde überschreitet.

Im Falle eines detektierten Grundbruchs unterbricht die Vorrichtung 10 einen Betrieb der Arbeitsmaschine 105. Hierzu weist die Vorrichtung 10 eine Wirkverbindung, insbesondere eine Datenverbindung, zur Arbeitsmaschine 105 auf, über welche die Vorrichtung 10 den Betrieb der Arbeitsmaschine 105 unterbrechen kann. Vorzugsweise erfolgt das Unterbrechen über ein Einwirken der Vorrichtung 10 auf eine nicht gezeigte Steuerung der Arbeitsmaschine 105.

Fig. 3 zeigt eine alternative Anordnung der Vorrichtung 10 zur Grundbruchüberwachung. Die Vorrichtung 10 in Fig. 3 ist anstatt auf dem Stützfußteller 120 auf der Unterlegplatte 130 angeordnet. Der Sensor 20 der Vorrichtung 10 erfasst nun eine Lageänderung der Unterlegplatte 130, wobei die Auswerteeinheit 40 dazu ausgebildet ist, basierend auf der erfassten Lageänderung der Unterlegplatte 130 einen Grundbruch zu detektieren.

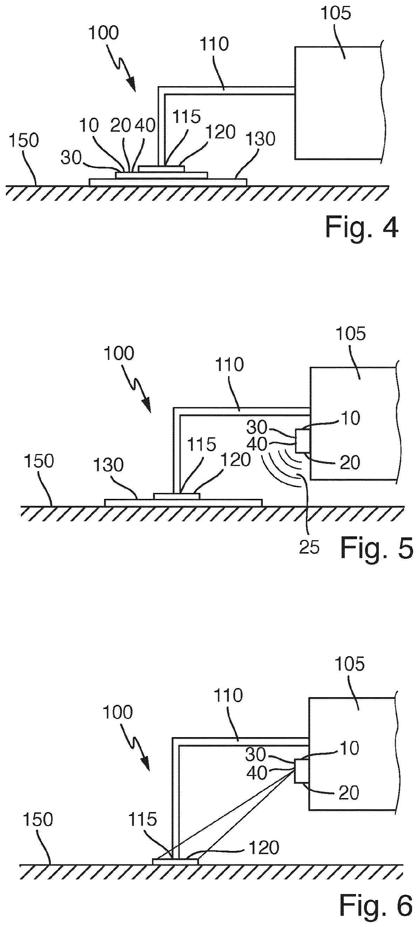

Fig. 4 zeigt eine alternative Anordnung der Vorrichtung 10 zur Grundbruchüberwachung. Die Vorrichtung 10 zur Grundbruchüberwachung ist hierbei zwischen dem Stützfußteller 120 und der Unterlegplatte 130 angeordnet.

Fig. 5 zeigt eine alternative Anordnung der Vorrichtung 10 zur Grundbruchüberwachung. Die Vorrichtung 10 zur Grundbruchüberwachung ist hierbei an der Arbeitsmaschine 105 angeordnet. Der Sensor 20 ist vorliegend als Distanzsensors ausgebildet, der die Distanz zwischen der Vorrichtung 10 zur Grundbruchüberwachung und dem Stützfußteller 120 und/oder der Unterlegplatte 130 misst. Die Distanzmessung erfolgt durch Aussenden und Empfangen eines Distanzsignals 25, insbesondere durch Messen einer Laufzeit des Distanzsignals 25. Der Sensor 20 ist dazu ausgebildet, eine Lageänderung des Stützfußtellers 120 und/oder der Unterlegplatte 130 zu erfassen, wenn sich zwei zeitlich nacheinander gemessene Distanzen voneinander unterscheiden.

Fig. 6 zeigt die Vorrichtung 10 zur Grundbruchüberwachung mit dem Sensor 20, der hier als 3D-Kamerasystem ausgebildet ist. Das 3D-Kamerasystem erzeugt Bilddaten des Stützfußtellers 120. Aus den erzeugten Bilddaten kann das 3D-Kamerasystem durch Mustererkennung die Lageänderung des Stützfußtellers 120 oder alternativ die Lageänderung einer Unterlegplatte, sofern vorhanden, erfassen.

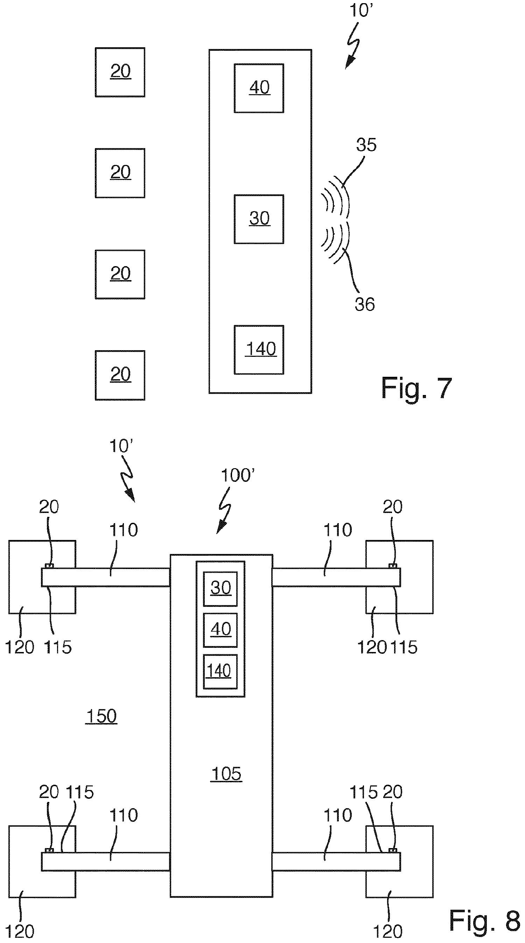

Fig. 7 zeigt ein schematisches Blockdiagramm einer Vorrichtung 10' zur Grundbruchüberwachung gemäß einer weiteren Ausführungsform. Im Unterschied zu der in Fig. 1 gezeigten Ausführungsform weist die in Fig. 7 gezeigte Vorrichtung 10' vier Sensoren 20 auf, die jeweils in Datenverbindung zur Auswerteeinheit 40 stehen. Die vier Sensoren 20 sind jeweils in eigenen Gehäusen angeordnet und sind räumlich voneinander getrennt anordenbar. Dies ermöglicht es, jeden Sensor 20 räumlich von der Auswerteeinheit 40 getrennt anzuordnen. Die Auswerteeinheit 40, der Signalgeber 30 und der Energiespeicher 140 sind in einem eigenen Gehäuse angeordnet.

Fig. 8 zeigt einen Anwendungsfall der in Fig. 7 gezeigten Vorrichtung 10' zur Grundbruchüberwachung, die Teil eines Systems 100' ist. In Fig. 8 ist die mobile Arbeitsmaschine 105 schematisch in einer Draufsicht dargestellt. An jedem der vier Stützausleger 110 der Arbeitsmaschine 105 ist ein Sensor 20 zum Erfassen der Lageänderung des zugehörigen Stützfußtellers 120 angeordnet.

Sobald mindestens einer der Sensoren 20 eine Lageänderung erfasst, die einen Grenzwert überschreitet, detektiert die Auswerteeinheit 40 einen Grundbruch.

Die erfindungsgemäße Vorrichtung 10, 10' und das erfindungsgemäße System 100, 100' ermöglichen ein möglichst frühzeitiges Erkennen eines Grundbruchs.

## Patentansprüche

1. Vorrichtung (10, 10') zur Grundbruchüberwachung für eine mobile Arbeitsmaschine (105),
- wobei die Arbeitsmaschine (105) eine Anzahl von Stützauslegern (110) aufweist,
- wobei ein jeweiliger Stützausleger (110) einen Stützfuß (115) mit einem Stützfußteller (120) aufweist, wobei in einem abgestützten Zustand der mobilen Arbeitsmaschine (105) der Stützfußteller (120) mindestens eines Stützfußes (115) auf einem die Arbeitsmaschine (105) umgebenden Untergrund (150) angeordnet ist oder auf einer Unterlegplatte (130) angeordnet ist,
wobei die Vorrichtung (10, 10') zur Grundbruchüberwachung aufweist:
- eine Anzahl von Sensoren (20) zum Erfassen einer Lageänderung in Form eines Kippens, eines Neigens oder einer Rotation um eine oder mehrere Rotationsachsen mindestens eines Stützfußtellers (120) und/oder mindestens einer Unterlegplatte (130), und
- eine Auswerteeinheit (40), die mit der Anzahl von Sensoren (20) in Datenverbindung steht und die dazu ausgebildet ist, basierend auf einer mittels der Anzahl von Sensoren (20) erfassten Lageänderung des mindestens eines Stützfußtellers (120) und/oder der mindestens einen Unterlegplatte (130) in einem abgestützten Zustand einen Grundbruch zu detektieren.

2. Vorrichtung (10, 10') zur Grundbruchüberwachung nach Anspruch 1,
- wobei ein jeweiliger Sensor (20) der Anzahl von Sensoren (20) einen Kippsensor, einen Neigungssensor, einen Lagesensor, einen Beschleunigungssensor, einen Drucksensor, einen Wegsensor, einen Distanzsensor und/oder ein 3D-Kamerasystem aufweist.

3. Vorrichtung (10, 10') zur Grundbruchüberwachung nach einem der vorhergehenden Ansprüche, aufweisend:
- einen Signalgeber (30), der dazu ausgebildet ist, bei einem detektierten Grundbruch ein Warnsignal (35) auszugeben, insbesondere ein optisches, akustisches und/oder haptisches Warnsignal (35).

4. Vorrichtung (10, 10') zur Grundbruchüberwachung nach einem der vorhergehenden Ansprüche,
- wobei die Vorrichtung (10, 10') zur Grundbruchüberwachung einen Energiespeicher (140) aufweist, der dazu ausgebildet ist, die Vorrichtung (10, 10') zur Grundbruchüberwachung mit Energie zu versorgen.

5. Vorrichtung (10, 10') zur Grundbruchüberwachung nach Anspruch 3 und 4,
- wobei der Signalgeber (30) dazu ausgebildet ist, ein Ladezustandswarnsignal (36) auszugeben, wenn ein Ladezustand des Energiespeichers (140) einen Grenzwert unterschreitet.

6. System (100, 100'), aufweisend:
- eine mobile Arbeitsmaschine (105) mit einer Anzahl von Stützauslegern (110), wobei ein jeweiliger Stützausleger (110) einen Stützfuß (115) mit einem Stützfußteller (120) aufweist, wobei der Stützfußteller (120) mindestens eines Stützfußes (115) dazu ausgebildet ist, in einem abgestützten Zustand der mobilen Arbeitsmaschine (105) auf einem die Arbeitsmaschine (105) umgebenden Untergrund (150) angeordnet zu sein oder auf einer Unterlegplatte (130) angeordnet zu sein, wobei die Unterlegplatte (130) auf dem die Arbeitsmaschine (105) umgebenden Untergrund (150) aufgelegt ist, und
- eine Vorrichtung (10, 10') zur Grundbruchüberwachung nach einem der vorhergehenden Ansprüche.

7. System (100, 100') nach Anspruch 6,
- wobei die Vorrichtung (10, 10') zur Grundbruchüberwachung dazu ausgebildet ist, bei einem detektierten Grundbruch einen Betrieb der Arbeitsmaschine (105) zu unterbrechen.

## Claims

1. Device (10, 10') for monitoring for bearing capacity failure for a mobile work machine (105),
- wherein the work machine (105) has a number of stabilizers (110),
- wherein each stabilizer (110) has a support foot (115) with a support foot plate (120), wherein in a supported state of the mobile work machine (105) the support foot plate (120) of at least one support foot (115) is arranged on an underlying surface (150) surrounding the work machine (105) or is arranged on a baseplate (130),
wherein the device (10, 10') for monitoring for bearing capacity failure has:
- a number of sensors (20) for sensing a change in position in the form of tilting, inclination or rotation about one or more axes of rotation of at least one support foot plate (120) and/or at least one baseplate (130), and
- an evaluation unit (40) which has a data connection to the number of sensors (20) and which is designed to detect bearing capacity failure on the basis of a change in position, sensed by means of the number of sensors (20), of the at least one support foot plate (120) and/or the at least one baseplate (130) in a supported state.

2. Device (10, 10') for monitoring for bearing capacity failure according to Claim 1,
- wherein each sensor (20) of the number of sensors (20) has a tilt sensor, an inclination sensor, a position sensor, an acceleration sensor, a pressure sensor, a travel sensor, a distance sensor and/or a 3D camera system.

3. Device (10, 10') for monitoring for bearing capacity failure according to one of the preceding claims, having:
- a signal encoder (30) which is designed to output a warning signal (35), in particular an optical, acoustic and/or haptic warning signal (35), when bearing capacity failure is detected.

4. Device (10, 10') for monitoring for bearing capacity failure according to one of the preceding claims,
- wherein the device (10, 10') for monitoring for bearing capacity failure has an energy store (140), which is designed to supply the device (10, 10') for monitoring for bearing capacity failure with energy.

5. Device (10, 10') for monitoring for bearing capacity failure according to Claims 3 and 4,
- wherein the signal encoder (30) is designed to output a state-of-charge warning signal (36) if a state-of-charge of the energy store (140) drops below a limiting value.

6. System (100, 100'), having:
- a mobile work machine (105) with a number of stabilizers (110), wherein each stabilizer (110) has a support foot (115) with a support foot plate (120), wherein the support foot plate (120) of at least one support foot (115) is designed to be arranged on an underlying surface (150) surrounding the work machine (105) or to be arranged on a baseplate (130) in a supported state of the mobile work machine (105), wherein the baseplate (130) is positioned on the underlying surface (150) surrounding the work machine (105), and
- a device (10, 10') for monitoring for bearing capacity failure according to one of the preceding claims.

7. System (100, 100') according to Claim 6,
- wherein the device (10, 10') for monitoring for bearing capacity failure is designed to interrupt operation of the work machine (105) when bearing capacity failure is detected.

## Revendications

1. Dispositif (10, 10') de surveillance de l'affaissement du sol pour une machine de travail (105) mobile,
- la machine de travail (105) possédant un certain nombre de stabilisateurs (110),
- un stabilisateur (110) respectif possédant une béquille (115) pourvue d'un plateau de béquille (120), dans une position en appui de la machine de travail (105) mobile, le plateau de béquille (120) d'au moins une béquille (115) étant disposé sur un sol (150) qui entoure la machine de travail (105) ou étant disposé sur une plaque de calage (130),
le dispositif (10, 10') de surveillance de l'affaissement du sol possédant :
- un certain nombre de capteurs (20) destinés à détecter un changement de position sous la forme d'un basculement, d'une inclinaison ou d'une rotation autour d'un ou plusieurs axes de rotation d'au moins un plateau de béquille (120) et/ou d'au moins une plaque de calage (130), et
- une unité d'interprétation (40), qui se trouve en liaison de données avec le certain nombre de capteurs (20) et qui est configurée pour détecter un affaissement du sol en se basant sur un changement de position, détecté au moyen du certain nombre de capteurs (20), de l'au moins un plateau de béquille (120) et/ou de l'au moins une plaque de calage (130) dans un état en appui.

2. Dispositif (10, 10') de surveillance de l'affaissement du sol selon la revendication 1,
- un capteur (20) respectif du certain nombre de capteurs (20) possédant un capteur de basculement, un capteur d'inclinaison, un capteur de position, un capteur d'accélération, un capteur de pression, un capteur de course, un capteur de distance et/ou un système de caméra 3D.

3. Dispositif (10, 10') de surveillance de l'affaissement du sol selon l'une des revendications précédentes, possédant :
- un transmetteur de signal (30), qui est configuré pour, en cas d'affaissement du sol détecté, délivrer un signal d'alerte (35), notamment un signal d'alerte (35) visuel, sonore et/ou haptique.

4. Dispositif (10, 10') de surveillance de l'affaissement du sol selon l'une des revendications précédentes,
- le dispositif (10, 10') de surveillance de l'affaissement du sol possédant un accumulateur d'énergie (140), lequel est configuré pour alimenter en énergie le dispositif (10, 10') de surveillance de l'affaissement du sol.

5. Dispositif (10, 10') de surveillance de l'affaissement du sol selon les revendications 3 et 4,
- le transmetteur de signal (30) étant configuré pour délivrer un signal d'état de charge (36) lorsque l'état de charge de l'accumulateur d'énergie (140) devient inférieur à une valeur limite.

6. Système (100, 100'), possédant :
- une machine de travail (105) comprenant un certain nombre de stabilisateurs (110), un stabilisateur (110) respectif possédant une béquille (115) pourvue d'un plateau de béquille (120), le plateau de béquille (120) d'au moins une béquille (115) étant configuré pour, dans une position en appui de la machine de travail (105) mobile, être disposé sur un sol (150) qui entoure la machine de travail (105) ou être disposé sur une plaque de calage (130),
la plaque de calage (130) étant posée sur le sol (150) qui entoure la machine de travail (105), et
- un dispositif (10, 10') de surveillance de l'affaissement du sol selon l'une des revendications précédentes.

7. Système (100, 100') selon la revendication 6,
- le dispositif (10, 10') de surveillance de l'affaissement du sol étant configuré pour interrompre un fonctionnement de la machine de travail (105) dans le cas d'un affaissement du sol détecté.
